# EUROPEAN PATENT APPLICATION

(11) **EP 4 838 736 A1**
(43) Date of publication of application: **11.11.2026**
(21) Application number: 26176153.0
(22) Date of filing: 04.05.2026
(51) Int. Cl.: H02J 3/00, H02J 3/16, H02J 3/18, H02J 3/38, H02J 3/50, H02J 101/20, H02J 101/24, H02J 101/28, H02J 101/40

(54) **A METHOD FOR CONTROLLING AT LEAST ONE RENEWABLE ENERGY DEVICE FOR THE SWITCHING OF AT LEAST ONE SUBSTATION COMPENSATION DEVICE**

(30) Priority: 05.05.2025 IN 202521043549
(71) Applicant: Suzlon Energy Limited, Ahmedabad, Gujarat 380009 (IN)
(72) Inventor: Thies, Jens, 18057 Rostock (DE); Rudraraju, Venkata Rama Raju, 18057 Rostock (DE); Kumar Singh, Durgesh, 18057 Rostock (DE)
(74) Representative: Dornbrack, Tino

(57) **Abstract**

A method for controlling at least one renewable energy device for compensation of switching of at least one substation compensation device, comprising
- monitoring of measured voltages at bus bars (4) and at each of at least one renewable energy device (2),
- determining expected change in total reactive power injection during switching of at least one substation compensation device (6),
- determining expected change in voltage after switching of at least one substation compensation device (6) and
- pre-adjusting reactive power demand of renewable energy device (2) prior to switching substation compensation device (6), according to expected change in voltage after switching of at least one substation compensation device (6).

## Description

### FIELD OF INVENTION

The present invention is directed to a method for controlling at least one renewable energy device for compensation of switching of at least one substation compensation device.

### BACKGROUND

Prior art US 2013/0134789 A1 discloses a reactive power compensation method includes generating a variable power factor curve for at least one power generator based on information regarding network parameters; obtaining a value of an active output power parameter from the at least one generator; computing a reactive power based on the variable power factor curve and the value of the active power output parameter of the at least one generator; generating a reactive power compensation command based on the computed reactive power; and transmitting the reactive power compensation command to the at least one power generator for controlling operation of the at least one power generator.

Further from prior art is known that total reactive power demand of wind farm is shared between wind turbines and capacitor banks. When a capacitor bank connects or disconnects, the wind turbine demand decreases or increases. The capacitor banks switching is based on configured conditions, so that capacitor banks switched individually with time delays and hysteresis to allow settling and so minimize impact on voltages after switching. Wind turbine reactive demand is adjusted after capacitor banks are connected or disconnected from grid. Monitoring voltage levels, switching of capacitor banks only when all voltages are within set tolerances, these tolerances are less than operating ranges to have a margin for switching capacitor banks.

The known prior art has several disadvantages, namely
- risk of incompliance to grid code requirements at point of interconnection (POI) if capacitor banks cannot be used as compensation,
- risk of low voltage ride through (LVRT) or high voltage ride through (HVRT) conditions at wind turbine or wind turbine stops due to excessive voltage peaks after capacitor banks switching,
- no option of fast response due to switching with time delays as well as wind turbines may not have sufficient reactive capacity under all operating conditions to stabilize grid voltage at feed-in point
- capacitor stages are installed in wind farm as additional reactive power compensation devices; switching of capacitor banks causes voltage peaks or drops at medium voltage bus bar and at wind turbine level

### OBJECT OF THE INVENTION

An object of the present invention is to overcome the above-mentioned drawbacks, especially an aim is keeping grid parameters like grid voltage stable and controlled within defined limits at a feed-in point of renewable energy into the electric grid.

### SUMMARY OF THE INVENTION

An aspect of present invention to solve above-mentioned objects is a method for controlling at least one renewable energy device for compensation of switching of at least one substation compensation device.

The method for controlling at least one renewable energy device for compensation of switching of at least one substation compensation device, comprising
- monitoring measured voltages at bus bars and at each of at least one renewable energy device,
- determining expected change in total reactive power injection during switching of at least one substation compensation device,
- determining expected change in voltage after switching of at least one substation compensation device and
- pre-adjusting reactive power demand of renewable energy device prior to switching substation compensation device, according to expected change in voltage after switching of at least one substation compensation device.

Advantageously, the total reactive power demand of renewable energy devices shared between each renewable energy device and each substation compensation device, if the at least one substation compensation device will be connected or disconnected, then the power demand of at least one renewable energy device decreases or increases. Each substation compensation device is switched based on configured conditions; if more than one substation compensation device needs to be switched each substation compensation devices is switched individually with set time delays and hysteresis. Before giving command to switch at least one substation compensation device:
- determining which substation compensation device shall connect or disconnect,
- determine expected reactive power change, when respective substation compensation device connects or disconnects,
- pre-adjusting the reactive power demand of the at least one renewable energy device considering actual operating conditions of renewable energy device like generation level, voltage levels, or similar or a combination thereof and the expected reactive power change prior to giving substation compensation device switch command,
- after settling at least one renewable energy device, give switch command to respective substation compensation device.

In a preferred embodiment of the method for controlling at least one renewable energy device for compensation of switching of at least one substation compensation device, the method further comprises the step of post-adjusting reactive power demand of at the least one renewable energy device so that total reactive demand of substation compensation device and renewable energy device fulfils the total reactive demand.

According to this, renewable energy device demand will be re-adjusted after the substation compensation device connected or disconnected to avoid voltages beyond the normal operating conditions of the at least one renewable energy device and to avoid risk of fault ride through situations, as result of switching individual substation compensation device. The reactive power injection of the at least one renewable energy device shall be pre-adjusted prior to switching of discrete compensation. The amount of such pre-adjustment shall be flexible and dependent on the actual terminal and bus bar voltages at the moment of the intended switching of substation compensation device. This pre-adjustment prior to switching substation compensation devices shall have a higher amount if bus bar and/or terminal voltages are at or close to operational voltage limits at the renewable energy plant connection point (PSS), where all renewable energy devices are connected, or the point of interconnection (POI) to transmission grid, connected to the renewable energy plant via high voltage bus bar (up to 100 km distance).

In a preferred embodiment of the method for controlling at least one renewable energy device for compensation of switching of at least one substation compensation device, the method further comprises the step of continuously monitoring of measured voltages at bus bars and at each of the at least one renewable energy device. This serves the reduce of risk of unexpected and unwanted renewable energy device stops like wind turbine stops, especially due to over or under voltage condition or fault ride through (FRT) events and subsequent loss of generation and revenue.

In a preferred embodiment of the method for controlling at least one renewable energy device for compensation of switching of at least one substation compensation device, the method further comprises the step of changing means an increasing or decreasing of total reactive power injection by the at least one renewable energy device. This serves to improve the reduction of excessive voltage peaks or drops across all voltage levels as direct response to substation compensation device like reactive power compensation device connection or disconnection.

In a preferred embodiment of the method for controlling at least one renewable energy device for compensation of switching of at least one substation compensation device, the method further comprises the step of determining expected change in overvoltage or undervoltage after switching of at least one substation compensation device. This serves to reduce electrical stress on renewable energy device like wind turbine and other components in a renewable energy plant.

In a preferred embodiment of the method for controlling at least one renewable energy device for compensation of switching of at least one substation compensation device, the method further comprises the step of monitoring measured voltages at renewable energy plant connection point (9) and point of interconnection (10).

In a preferred embodiment of the method for controlling at least one renewable energy device for compensation of switching of at least one substation compensation device, the method further comprises the step of determining selection of at least one substation compensation device to connect or disconnect. This serves a potentially faster response to changing operating conditions through reduced time delays for switching substation compensation devices.

In a preferred embodiment of the method for controlling at least one renewable energy device for compensation of switching of at least one substation compensation device, the method further comprises that the at least one renewable energy device is at least one wind turbine or at least one photovoltaic device or a combination thereof.

In a preferred embodiment of the method for controlling at least one renewable energy device for compensation of switching of at least one substation compensation device, the method further comprises that the at least one substation compensation device is an reactive power compensation device like a capacitor bank or similar.

Another aspect of the present invention solving the above-mentioned object is directed to a controller of a renewable energy plant.

The controller of a renewable energy plant configured to execute said method for controlling at least one renewable energy device for compensation of switching of at least one substation compensation device.

In a preferred embodiment of the controller of a renewable energy plant, the controller further comprises:
- a monitoring module for monitoring the measured voltages at medium and high voltage bus bars and at each of at least one renewable energy device,
- a reactive power determination module for determining expected change in total reactive power injection during switching of at least one substation compensation device,
- a voltage determination module for determining expected change in voltage after switching of the at least one substation compensation device and
- a pre-adjusting module for pre-adjusting the reactive power demand of renewable energy device prior to switching substation compensation device, according to expected change in voltage after switching of at least one substation compensation device.

Advantageously, the controller comprises an output to send demands to at least one renewable energy device.

In a preferred embodiment of the controller of a renewable energy plant, the controller further comprises a post-adjusting module for adjusting the reactive power demand of renewable energy device after switching the substation compensation device, according to measured actual voltage and reactive power after switching of at least one substation compensation device.

Another aspect of the present invention solving the above-mentioned object is directed to a renewable energy plant.

The renewable energy plant comprising said controller.

In a preferred embodiment of the renewable energy plant, the renewable energy plant comprises at least one wind turbine or at least one photovoltaic device or a combination thereof.

In a preferred embodiment of the renewable energy plant, the renewable energy plant comprises at least one substation compensation device, which is an reactive power compensation device like a capacitor bank or similar.

Another aspect of the present invention solving the above-mentioned object is directed to a method for operating a renewable energy plant.

The method for operating a renewable energy plant by executing said method for controlling at least one renewable energy device for compensation of switching of at least one substation compensation device. This serves an improved grid code compliance of renewable energy devices such as wind farms or solar farms.

Another aspect of the present invention solving the above-mentioned object is directed to a computer program product.

The computer program product comprising instructions which, when executed by one or more computers, cause one or more computers to carry out said method for controlling at least one renewable energy device for compensation of switching of at least one substation compensation device.

Summing up, the present invention has the following advantages:
- reduction of excessive voltage peaks or drops across all voltage levels as direct response to substation compensation device like reactive power compensation device connection or disconnection;
- subsequently: reduced risk of unexpected and unwanted renewable energy device stops like wind turbine stops, especially due to over or under voltage condition or fault ride through (FRT) events and subsequent loss of generation and revenue;
- less electrical stress on renewable energy device like wind turbine and other component in renewable energy plant;
- overall smoother response;
- improved grid code compliance of renewable energy generating facilities such as wind farms or solar farms;
- potentially faster response to changing operating conditions through reduced time delays for switching substation compensation devices like reactive power compensation devices like capacitor banks;
- cost saving, due to no additional hardware requirments, thus an option for increased revenue, value addition in existing renewable generation assets;
- Offer solution as value added feature for retrofitting renewable energy device;
- Avoid excessive voltage spikes and potential fault ride through (FRT) conditions within a renewable energy plant like wind farm as result of switching substation compensation;
- Easy upgrade of existing renewable energy devices where voltage and reactive power control is done through substation compensation in addition to controlling renewable energy devices - power plant control.

### BRIEF DESCRIPTION OF DRAWINGS

The invention will now be explained in more detail with respect to exemplary embodiments with reference to the enclosed drawings, wherein:
- **Figure 1**: shows a renewable energy plant;
- **Figure 2**: shows a schematic view of substation comprising controller;
- **Figure 3**: shows a transition period switching on the substation compensation device and
- **Figure 4**: shows a transition period switching off the substation compensation device.

The foregoing and other aspects will become apparent from the following detailed description of the invention when considered in conjunction with the accompanying drawing figures. All of the described embodiments can be combined with one another. Thus, features of one embodiment can also be applied to the other embodiments without limiting the scope of the invention.

### DETAILED DESCRIPTION OF THE INVENTION

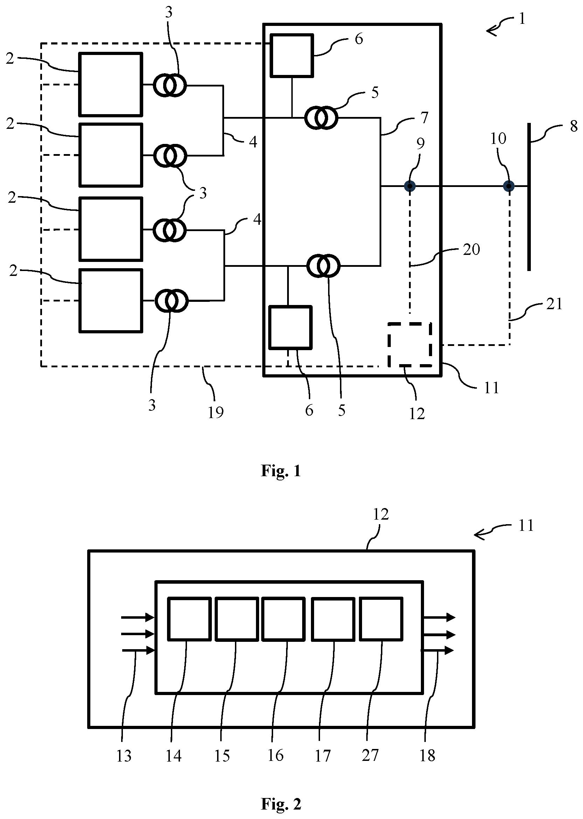

Figure 1 depicts a renewable energy plant 1 comprising renewable energy devices 2. However, the amount of the devices of the renewable energy plant 1 can be varied and depends on the size of renewable energy plant 1. Renewable energy device 2 can be wind turbines, photovoltaic panels or a combination of them. Each renewable energy device 2 is electrically coupled with a medium-voltage-transformer 3 belonging to the respective renewable energy device 2. So that the electrical power can be fed in a medium-voltage bus bar 4. Latter is electrically connected once to a high-voltage-transformer 5 and secondly to a substation compensation device 6. After the high-voltage-transformer 5 the electrical power is fed in a high-voltage bus bar 7, which is connected to transmission grid 8. At the high-voltage bus bar 7 a renewable energy plant connection point (PSS) 9 and a point of interconnection (POI) 10 are arranged. The substation compensation device 6 can be an reactive power compensation device like a one or more capacitor bank or at least one static synchronous compensator (STATCOM). Further the renewable energy plant 1 comprises a substation 11. This is signally coupled with the renewable energy devices 2, the substation compensation devices 6, the renewable energy plant connection point 9 and the point of interconnection 10. These signal connections are bidirectional. This means that the substation 11receives data from the renewable energy devices 2, the substation compensation devices 6, the renewable energy plant connection point 9 and the point of interconnection 10 and can send commands to renewable energy devices 2 and the substation compensation devices 6. The received data are measured voltages, electrical active power and reactive power of the renewable energy devices 2, the substation compensation devices 6 and from renewable energy plant connection point 9 as well as from the point of interconnection 10. At the same time the substation 11 controls voltages and reactive power of the renewable energy devices 2 and the substation compensation devices 6. Therefore, substation 11 comprises the high-voltage-transformer 5, the substation compensation device 6, the high-voltage bus bar 7, the transmission grid 8 and the renewable energy plant connection point (PSS) 9 as well as a substation controller 12.

Figure 2 depicts a schematic view of substation 11 having the substation controller 12 by omitting components. The substation controller 12 comprises an input 13 for receiving measured voltages, electrical power and reactive power of the renewable energy devices 2, the substation compensation devices 6 and from renewable energy plant connection point 9 as well as from the point of interconnection 10. Further, the substation controller 12 comprises a monitoring module 14 for monitoring measured voltages at medium-voltage bus bars 4, high voltage bus bars 7 and at each of at least one renewable energy device 2, a reactive power determination module 15 for determining an expected change in total reactive power injection during switching of at least one substation compensation device 6, a voltage determination module 16 for determining expected change in voltage after switching of at least one substation compensation device 6 and an pre-adjusting module 17 for pre-adjusting reactive power demand of renewable energy device 2 prior to switching substation compensation device 6, according to expected change in voltage after switching of at least one substation compensation device 6 and post-adjusting module 27 for adjusting the reactive power demand of renewable energy devices 2 after switching the substation compensation device 6. Furthermore, the controller 12 comprises an output 18 for providing commands to renewable energy device 2 prior to switching substation compensation device 6 and providing commands for switching of substation compensation device 6.

Back to Fig. 1, the total reactive power demand of the renewable energy devices 2 shared between each renewable energy device 2 and each substation compensation device 6 via signal line 19. When at least one of the substation compensation devices 6 connects or disconnects, the at least one renewable energy device demand decreases or increases. Each substation compensation device 6 switching is based on configured conditions such that the substation compensation devices 6 are switched individually with set time delays and hysteresis. Before giving command to switch at least one substation compensation device 6, the method is intended that it will be determined by voltage determination module 16 which substation compensation device 6 shall connect or disconnect and get size of substation compensation device 6, then pre-adjusting by pre-adjusting module 17 each renewable energy device reactive demand considering actual operating conditions of each renewable energy device 2 like generation level, voltage levels, or similar or a combination thereof and size of substation compensation device 6 prior to giving substation compensation device 6 a switch command, after settling at least one renewable energy device 2, give switch command by output 18 to respective substation compensation device 6.

According to this, renewable energy device 2 demand will be re-adjusted through post-adjusting module 27 after substation compensation device 6 connected or disconnected to avoid voltages beyond the normal operating conditions of the renewable energy devices 2 and to avoid risk of excessive voltage situations as result of connected or disconnected individual substation compensation devices 6. The reactive power injection of the renewable energy device 2 shall be pre-adjusted prior to switching of discrete compensation. The amount of such pre-adjustment shall be flexible and dependent on the actual terminal voltages at each of the renewable energy devices 2 and voltages at medium voltage bus bar 4 and high voltage bus bar 7 at the moment of the intended switching of substation compensation device 6. This pre-adjustment shall have a higher amount if the voltages at medium voltage bus bars 4 and/or high voltage bus bars 7 and/or terminal voltages are at or close to under or over voltage levels. This keeps grid parameters, especially grid voltage stable and controlled with defined limits at the renewable energy plant connection point (PSS) 9, where all renewable energy devices 2 are connected at renewable energy plant connection point 9, or the point of interconnection (POI) 10 to transmission grid 8, connected to the renewable energy plant 1 via high voltage bus bar 7 up to 100 km distance. At same time the reactive power will be measured at renewable energy plant connection point 9 and the point of interconnection 10 and transmitted via a PSS-signal line 20 and a POI-signal line 21.

In case, the renewable energy device 2 is a wind turbine and the substation compensation device 6 is a reactive power compensation device like a capacitor bank or similar the above-mentioned approach applies in the same manner. So, the total reactive power demand of wind farm 1 is shared between wind turbines 2 and an reactive power compensation device 6 like capacitor bank or similar. When the reactive power compensation device 6 connects or disconnects, the wind turbine demand decreases or increases. Reactive power compensation device 6 switching based on configured conditions such that the reactive power compensation devices 6 are switched individually with set time delays and hysteresis. Before giving command to switch reactive power compensation device 6 the method is intended that it will be determined by voltage determination module 16 which reactive power compensation device 6 shall connect or disconnect and get size of reactive power compensation device 6, then pre-adjust by pre-adjusting module 17 the wind turbine reactive demand considering actual operating conditions of each wind turbine 2 like generation level, voltage levels, or similar or a combination thereof and size of reactive power compensation device 6 prior to giving reactive power compensation device 6 a switch command, after settling of wind turbine 2, give switch command to respective reactive power compensation device6.

According to this, wind turbine demand will be re-adjusted after to the reactive power compensation device 6 connected or disconnected to avoid voltages beyond the normal operating conditions of each wind turbine 2 and to avoid risk of failure through excessive voltages as result of connecting or disconnecting individual reactive power compensation devices 6. The reactive power injection of the wind turbines 2 shall be pre-adjusted prior to switching each of the discrete compensation. The amount of such pre-adjustment shall be flexible and dependent on the actual voltages at terminals at medium voltage bus bars 4 and high voltage bus bars 7 at the moment of the intended switching of reactive power compensation device. This pre-adjustment shall have a higher amount if actual voltages at medium voltage bus bars 4 and/or high voltage bus bars 7 and/or terminal voltages are at or close to under or over voltage levels. This keeps grid parameters, especially grid voltage stable and controlled with defined limits at the renewable energy plant connection point (PSS) 9, where all wind turbines 2 are connected, or the point of interconnection (POI) 10 to transmission grid 8, connected to the wind farm 1 via high voltage bus bar 7 up to 100 km distance. At same time the reactive power will be measured at renewable energy plant connection point 9 and the point of interconnection 10 and transmitted via a PSS-signal line 20 and a POI-signal line 21.

This also applies in the same manner if the renewable energy device is a photovoltaic panel or a combination of wind turbines and photovoltaic panels.

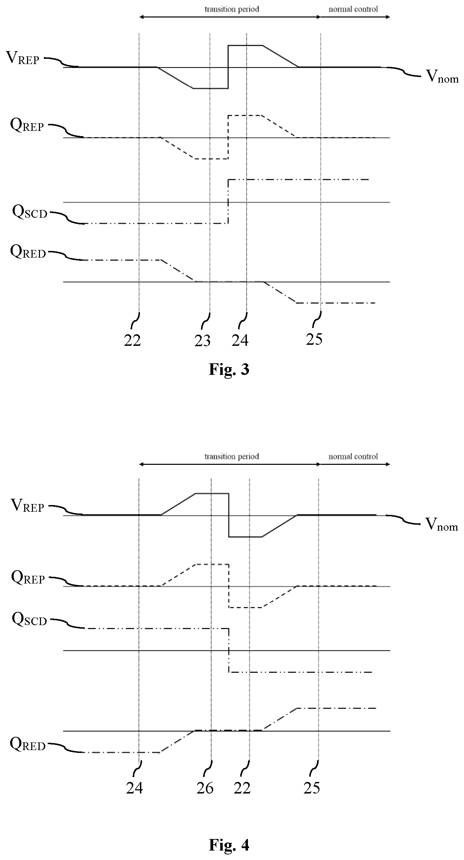

Figure 3 depicts transition period of switching on one of the substation compensation device 6. The pre-adjustment of demand of reactive power Q_{RED} of renewable energy devices 2 by the pre-adjusting module 17 depends on voltage V_{REP} of renewable energy plant 1 or at least some of the renewable energy devices 2. In normal range the substation compensation device 6 is off in SCD-off-stage 22. This will be monitored by monitoring module 14, which receives respective voltages via input 13, for example by measuring respective voltages. For example, the conditions in SCD-off-stage 22 could be as follows:
If in SCD-off-stage 22 the voltage V_{REP} of renewable energy plant 1 or at least some of the renewable energy devices 2 is in normal range, for example in range of 0.96 to 1.04 of nominal voltage Vₙₒₘ, then in decrease-demand-stage 23 decreasing the demand of reactive power Q_{RED} of renewable energy devices 2, for example by 50% of the capacity to be switched prior to applying the switch-on command to individual substation compensation device 6. In result, the reactive power Q_{REP} of renewable energy plant 1 injection decreases causing a reduction of the voltage V_{REP} of renewable energy plant 1.

If in SCD-off-stage 22 the voltage V_{REP} of renewable energy plant 1 or at least some of the renewable energy devices 2 is for example in range of 1.04 to 1.10 of nominal voltage Vₙₒₘ and further increase in voltages V_{REP} is expected by voltage determination module 16, then in decreasing-demand-stage 23 decreasing the demand of reactive power Q_{RED} of renewable energy devices 2 by reactive power determination module 15, for example by 80 to 100% according to the expected capacity to be switched prior to applying the switch-on command to individual substation compensation devices 6. In result, the reactive power Q_{REP} of renewable energy plant 1 injection decreases causing a reduction of the voltage V_{REP} of renewable energy plant 1.

If in SCD-off-stage 22 the voltage V_{REP} of renewable energy plant 1 or at least some of the renewable energy devices 2 is for example in range of 0.90 to 0.96 of nominal voltage Vₙₒₘ and further increase in voltages V_{REP} is expected by voltage determination module 16, then in decrease-demand-stage 23 decreasing the demand of reactive power Q_{RED} of renewable energy devices 2 by reactive power determination module 15, for example by 0 to 20% according to the expected capacity to be switched prior to applying the switch-on command to individual substation compensation devices 6. In result, the reactive power Q_{REP} of renewable energy plant 1injection decreases only little, avoiding a too deep drop of the voltage V_{REP} of renewable energy plant 1.

In SCD-on stage 24 switching on individual substation compensation devices 6 after the reactive power Q_{RED} injection of renewable energy devices 2 have been decreased to pre-defined level and has settled. Then awaiting connection of individual substation compensation device 6 with increasing reactive power Q_{SCD} of individual substation compensation device 6. After this, adjusting demand of reactive power Q_{RED} of renewable energy devices 2 by post-adjusting module 27 after switching on individual substation compensation devices 6 so that the total reactive power generation matches the demand in return-stage 25 such that the voltage V_{RED} of renewable energy plant 1 returns to nominal voltage Vₙₒₘ for normal control. Therefore, the reactive power Q_{REP} of renewable energy plant 1injection decreases adjusting the voltage V_{REP} of renewable energy plant 1 at desired level.

More in detail, in event the renewable energy plant 1 is a wind farm comprising wind turbines 2 and the substation compensation device is an reactive power compensation device like capacitor bank, the pre-adjustment of demand of reactive power Q_{RED} of wind turbines 2 by the pre-adjusting module 17 depends on voltage V_{REP} of wind farm 1 or at least some of the wind turbines 2 in normal range the reactive power compensation device 6 are off in SCD-off-stage 22. This will be monitored by monitoring module 14, which receives respective voltages via input 13, for example by measuring respective voltages. For example, the conditions in SCD-off-stage 22 could be as follows:

If in SCD-off-stage 22 the voltage V_{REP} of wind farm 1 or at least some of the wind turbines 2 is in normal range, for example in range of 0.96 to 1.04 of nominal voltage Vₙₒₘ, then in decrease-demand-stage 23 decreasing the demand of reactive power Q_{RED} of wind turbines 2, for example by 50% of the capacity to be switched prior to applying the switch-on command to individual energy storages device 6. In result, the reactive power Q_{REP} of wind farm 1 injection decreases causing a reduction of the voltage V_{REP} of wind farm 1.

If in SCD-off-stage 22 the voltage V_{REP} of wind farm 1 or at least some of the wind turbine 2 is for example in range of 1.04 to 1.10 of nominal voltage Vₙₒₘ and further increase in voltages V_{REP} is expected by voltage determination module 16, then in decrease-demand-stage 23 decreasing the demand of reactive power Q_{RED} of wind turbine 2 by reactive power determination module 15, for example by 80 to 100% according to the expected capacity to be switched prior to applying the switch-on command to individual reactive power compensation devices 6. In result, the reactive power Q_{REP} of wind farm 1 injection decrease causing a reduction of the voltage V_{REP} of wind farm 1.

If in SCD-off-stage 22 the voltage V_{REP} of wind farm 1 or at least some of the wind turbine 2 is for example in range of 0.90 to 0.96 of nominal voltage Vₙₒₘ and further increase in voltages V_{REP} is expected by voltage determination module 16, then in decrease-demand-stage 23 decreasing the demand of reactive power Q_{RED} of wind turbine 2 by reactive power determination module 15, for example by 0% to 20% according to the expected capacity to be switched prior to applying the switch-on command to individual reactive power compensation devices 6. In result, the reactive power Q_{REP} of wind farm 1injection decreases only little, avoiding a too deep drop of voltage V_{REP} of wind farm 1.

In SCD-on stage 24 switching on individual reactive power compensation devices 6 after the reactive power Q_{RED} injection of wind turbines 2 have been decreased to pre-defined level and has settled. Then awaiting connection of individual reactive power compensation devices 6 with increasing reactive power Q_{SCD} of individual reactive power compensation devices 6. After this, adjusting the demand of reactive power Q_{RED} of wind turbines 2 by post-adjusting module 27 after switching on individual reactive power compensation devices 6 so that the total reactive power generation matches the demand in return-stage 25 such that the voltage V_{RED} of wind farm 1 returns to nominal voltage Vₙₒₘ for normal control. Therefore, the reactive power Q_{REP} of wind farm 1 injection decreases adjusting the voltage V_{REP} of wind farm 1 at desired level.

This also applies in the same manner if the renewable energy device is a photovoltaic panel or a combination of wind turbines and photovoltaic panels.

Figure 4 depicts transition period switching off the substation compensation device 6. The pre-adjustment of demand of reactive power Q_{RED} of renewable energy devices 2 by pre-adjusting module 17 depends on voltage V_{REP} of renewable energy plant 1 or at least some of the renewable energy devices 2 in normal range the substation compensation devices 6 are on in SCD-on-stage 24. This will be monitored by monitoring module 14, which receives respective voltages via input 13, for example by measuring respective voltages. For example, the conditions in SCD-on-stage 24 could be as follows:
If in SCD-on-stage 24 the voltage V_{REP} of renewable energy plant 1 or at least some of the renewable energy devices 2 is in normal range, for example in range of 0.96 to 1.04 of nominal voltage Vₙₒₘ, then in increasing-demand-stage 26 increasing the demand of reactive power Q_{RED} of renewable energy devices 2, for example by 50% of the capacity to be switched prior to applying the switch-off command to individual substation compensation device 6. In result the reactive power Q_{REP} of renewable energy plant 1 injection increases causing an increase of the voltage V_{REP} of renewable energy plant 1.

If in SCD-on-stage 24 the voltage V_{REP} of renewable energy plant 1 or at least some of the renewable energy devices 2 is for example in range of 1.04 to 1.10 of nominal voltage Vₙₒₘ and further decreasing in voltages V_{REP} is expected by voltage determination module 16, then in increasing-demand-stage 26 increasing the demand of reactive power Q_{RED} of renewable energy devices 2 by reactive power determination module 15, for example by 0% to 20% according to the expected capacity to be switched prior to applying the switch-off command to individual substation compensation devices 6. In result, the reactive power Q_{REP} of renewable energy plant 1 injection increases at only a little avoiding high voltage V_{REP} of renewable energy plant 1.

If in SCD-on-stage 24 the voltage V_{REP} of renewable energy plant 1 or at least some of the renewable energy devices 2 is for example in range of 0.90 to 0.96 of nominal voltage Vₙₒₘ and further decreasing in voltages V_{REP} is expected by voltage determination module 16, then in increasing-demand-stage 26 increasing the demand of reactive power Q_{RED} of renewable energy devices 2 by reactive power determination module 15, for example by 80 to 100% according to the expected capacity to be switched prior to applying the switch-off command to individual substation compensation devices 6. In result, the reactive power Q_{REP} of renewable energy plant 1injection increases causing an increase of the voltage V_{REP} of renewable energy plant 1.

In SCD-off stage 22 switching off individual substation compensation devices 6 after the reactive power Q_{RED} injection of renewable energy devices 2 has been increased to pre-defined level and has settled. Then awaiting disconnection of individual substation compensation devices 6 with decreased reactive power Q_{SCD} of individual substation compensation device 6. After this, adjusting demand of reactive power Q_{RED} of renewable energy devices 2 by post-adjusting module 27 after switching off individual substation compensation devices 6 so that the total reactive power generation matches the demand in return-stage 25 such that the voltage V_{RED} of renewable energy plant 1 returns to nominal voltage Vₙₒₘ for normal control. Therefore, the reactive power Q_{REP} of renewable energy plant 1injection increases at the same time with the voltage V_{REP} of renewable energy plant 1.

More in detail, in case of the renewable energy plant 1 is a wind farm 1 comprising wind turbines 2 and the substation compensation device 6 is an reactive power compensation device 6 like a capacitor bank, The pre-adjustment of demand of reactive power Q_{RED} of wind turbines 2 by the pre-adjusting module 17 depends on voltage V_{REP} of wind farm 1 or at least some of the wind turbines 2 in normal range the reactive power compensation devices 6 are on in SCD-on-stage 24. This will be monitored by monitoring module 14, which receives respective voltages via input 13, for example by measuring respective voltages. For example, the conditions in SCD-on-stage 24 could be as follows:

If in SCD-on-stage 24 the voltage V_{REP} of wind farm 1 or at least some of the wind turbines 2 is in normal range, for example in range of 0.96 to 1.04 of nominal voltage Vₙₒₘ, then in increasing-demand-stage 26 increasing the demand of reactive power Q_{RED} of wind turbines 2, for example by 50% of the capacity to be switched prior to applying the switch-off command to individual reactive power compensation device 6. In result the reactive power Q_{REP} of wind farm 1 injection increases at the same time with the voltage V_{REP} of wind farm 1.

If in SCD-on-stage 24 the voltage V_{REP} of wind farm 1 or at least some of the wind turbines 2 is for example in range of 1.04 to 1.10 of nominal voltage Vₙₒₘ and further decrease in voltages V_{REP} is expected by voltage determination module 16, then in increasing-demand-stage 26 increasing the demand of reactive power Q_{RED} of wind turbine 2 by reactive power determination module 15, for example by 0% to 20% according to the expected capacity to be switched prior to applying the switch-off command to individual reactive power compensation devices 6. In result, the reactive power Q_{REP} of wind farm 1 injection increases only a little avoiding high the voltage V_{REP} of wind farm 1.

If in SCD-on-stage 24 the voltage V_{REP} of wind farm 1 or at least some of the wind turbines 2 is for example in range of 0.90 to 0.96 of nominal voltage Vₙₒₘ and further decreasing in voltages V_{REP} is expected by voltage determination module 16, then in increasing-demand-stage 26 increasing the demand of reactive power Q_{RED} of wind turbines 2 by reactive power determination module 15, for example by 80 to 100% according to the expected capacity to be switched prior to applying the switch-off command to individual reactive power compensation devices 6. In result, the reactive power Q_{REP} of wind farm 1injection increases causing an increase of the voltage V_{REP} of wind farm 1.

In SCD-off stage 22 switching off individual reactive power compensation devices 6 after the reactive power Q_{RED} injection of wind turbines 2 have been increased to pre-defined level and has settled. Then awaiting disconnection of individual reactive power compensation devices 6 with decreased reactive power Q_{SCD} of individual reactive power compensation device 6. After this, adjusting demand of reactive power Q_{RED} of wind turbine 2 by post-adjusting module 27 after switching off individual reactive power compensation devices 6 so that the total reactive power generation matches the demand in return-stage 25 such that the voltage V_{RED} of wind farm 1 returns to nominal voltage Vₙₒₘ for normal control. Therefore, the reactive power Q_{REP} of wind farm 1 injection increases causing an increase of the voltage V_{REP} of wind farm 1.

This also applies in the same manner if the renewable energy device is a photovoltaic panel or a combination of wind turbines and photovoltaic panels.

Those of skill in the art would further appreciate that the various illustrative logical blocks, modules, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application.

The various illustrative logical blocks, modules, and algorithms described in connection with the disclosure herein may be implemented or performed with one or more general-purpose processors, a digital signal processor (DSP), cloud computing architecture, an application specific integrated circuit (ASIC), a field programmable gate array (FPGA), programmable logic controller (PLC) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The present disclosure also relates to computing systems adapted to carry out any of the methods disclosed herein.

The present disclosure also relates to a computer program or computer program product comprising instructions (code), which when executed, performs any of the methods disclosed herein.

The computer program may be in the form of source code, object code, a code intermediate source and object code such as in partially compiled form, or in any other form suitable for use in the implementation of the processes. The carrier may be any entity or device capable of carrying the computer program.

If implemented in software/firmware, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

**LIST OF REFERENCE SIGNS**

| | | | |
|---|---|---|---|
| 1 | renewable energy plant | 26 | increase-demand-stage |
| 2 | renewable energy device | 27 | post-adjusting module |
| 3 | medium-voltage-transformer | VREP | voltage of renewable energy plant |
| 4 | medium-voltage bus bar | | |
| 5 | high-voltage-transformer | Q_{REP} | reactive power of renewable energy plant |
| 6 | substation compensation device | | |
| | | Q_{SCD} | reactive power of substation compensation device |
| 7 | high-voltage bus bar | | |
| 8 | transmission grid | Q_{RED} | reactive power of renewable energy device |
| 9 | renewable energy plant connection point (PSS) | | |
| 10 | point of interconnection (POI) | | |
| 11 | substation | | |
| 12 | substation controller | | |
| 13 | input | | |
| 14 | monitoring module | | |
| 15 | reactive power determination module | | |
| 16 | voltage determination module | | |
| 17 | pre-adjusting module | | |
| 18 | output | | |
| 19 | signal line | | |
| 20 | PSS-signal line | | |
| 21 | POI-signal line | | |
| 22 | SCD-off-stage | | |
| 23 | decrease-demand-stage | | |
| 24 | SCD-on stage | | |
| 25 | return-stage | | |

## Claims

1. A method for controlling at least one renewable energy device for switching of at least one substation compensation device, comprising
- monitoring measured voltages at bus bars (4) and at each of at least one renewable energy device (2),
- determining expected change in total reactive power injection during switching of at least one substation compensation device (6),
- determining expected change in voltage after switching of at least one substation compensation device (6) and
- pre-adjusting reactive power demand of renewable energy device (2) prior to switching substation compensation device (6), according to expected change in voltage after switching of at least one substation compensation device (6).

2. The method for controlling at least one renewable energy device for switching of at least one substation compensation device according to claim 1, wherein post-adjusting reactive power demand of at the least one renewable energy device (2) so that total reactive demand of substation compensation device (6) and renewable energy device (2) fulfils the total reactive demand.

3. The method for controlling at least one renewable energy device for switching of at least one substation compensation device according to claim 1 or 2, wherein continuously monitoring of measured voltages at bus bars (4) and at each of at least one renewable energy device (2).

4. The method for controlling at least one renewable energy device for switching of at least one substation compensation device according to one of the claims 1 to 3, wherein changing means an increasing or decreasing of total reactive power injection by the at least one renewable energy device (2).

5. The method for controlling at least one renewable energy device for switching of at least one substation compensation device according to one of the claims 1 to 4, wherein determining expected change in overvoltage or undervoltage after switching of at least one substation compensation device (6).

6. The method for controlling at least one renewable energy device for switching of at least one substation compensation device according to one of the claims 1 to 5, monitoring measured voltages at renewable energy plant connection point (9) and point of interconnection (10).

7. The method for controlling at least one renewable energy device for switching of at least one substation compensation device according to one of the claims 1 to 6, wherein determining selection of at least one substation compensation device (6) to connect or disconnect.

8. The method for controlling at least one renewable energy device for switching of at least one substation compensation device according to one of the claims 1 to 7, wherein the at least one renewable energy device (2) is at least one wind turbine or at least one photovoltaic device or a combination thereof.

9. The method for controlling at least one renewable energy device for switching of at least one substation compensation device according to one of the claims 1 to 8, wherein the at least one substation compensation device (6) is an reactive power compensation device like capacitor bank or similar.

10. A controller of a renewable energy plant configured to execute a method for controlling at least one renewable energy device (2) for compensation of switching of the at least one substation compensation device (6) according to one of the claims 1 to 9.

11. The controller of a renewable energy plant according to claim 10 comprises:
- a monitoring module (14) for monitoring of measured voltages at bus bars (4) and at each of at least one renewable energy device (2),
- a reactive power determination module (15) for determining expected change in total reactive power injection during switching of at least one substation compensation device (6),
- a voltage determination module (16) for determining expected change in voltage after switching of at least one substation compensation device (6) and
- a pre-adjusting module (17) for pre-adjusting reactive power demand of renewable energy device (2) prior to switching substation compensation device (6), according to expected change in voltage after switching of at least one substation compensation device (6).

12. The controller of a renewable energy plant according to claim 11, wherein the controller further comprises a post-adjusting module (27) for adjusting reactive power demand of renewable energy device (2) after switching substation compensation device (6), according to actual measured voltage after switching of at least one substation compensation device (6).

13. A renewable energy plant comprises a controller according to one of the claims 10 to 12.

14. The renewable energy plant according to claim 13, wherein the renewable energy plant (1) comprises at least one wind turbine.

15. The renewable energy plant according to claim 13 or 14, wherein the renewable energy plant (1) comprises at least one substation compensation device (6), which is a reactive power compensation device like capacitor bank or similar.

16. A method for operating a renewable energy plant by executing a method for controlling at least one renewable energy device (2) for compensation of switching of at least one substation compensation device (6) according to one of the claims 1 to 9.

17. A computer program product comprising instructions which, when executed by one or more computers, cause one or more computers to carry out the method for controlling at least one renewable energy device (2) for compensation of switching of the at least one substation compensation device (2) according to one of the claims 1 to 9.
